# FASCICULE DE BREVET EUROPEEN

(11) **EP 2 897 716 B1**
(45) Date de publication et mention de la délivrance du brevet: **18.03.2020**
(21) Numéro de dépôt: 13779265.1
(22) Date de dépôt: 19.09.2013
(51) Int. Cl.: B01D 61/58, B01D 65/02, E21B 43/20

(54) **UNITÉ SOUS-MARINE DE TRAITEMENT DE L'EAU ET PROCÉDÉ DE NETTOYAGE DE LADITE UNITÉ**
UNTERWASSER-WASSERBEHANDLUNGSEINHEIT UND VERFAHREN ZUR REINIGUNG DIESER EINHEIT
UNDERWATER WATER TREATMENT UNIT AND METHOD FOR CLEANING SAID UNIT

(30) Priorité: 20.09.2012 FR 1258853
(43) Date de publication de la demande: 29.07.2015
(73) Titulaire: Total SA, 92400 Courbevoie (FR); Saipem SA, 78180 Montigny-le-Bretonneux (FR); Veolia Eau - Compagnie Generale Des Eaux, 75008 Paris (FR); VWS Westgarth Limited, East Kilbride G74 5PR (GB)
(72) Inventeur: RIVIERE, Luc, F-64320 Idron (FR); PEDENAUD, Pierre, F-64230 Lescar (FR); BIGEONNEAU, Didier, F-31450 Montbrun-lauragais (FR); ANRES, Stéphane, F-78210 Saint Cyr L'ecole (FR); HALLOT, Raymond, F-78960 Voisins Le Bretonneux (FR); EVANS, Wayne, Lower Moor WR10 2PL (GB); LOTHIAN, David, Ardrossan KA22 7PX (GB)
(74) Mandataire: Plasseraud IP
(86) Numéro de dépôt international: PCT/FR2013/052167
(87) Numéro de publication internationale: WO 2014/044978

(56) Documents cités:
- WO-A1-2011/140602
- WO-A1-2012/049618
- GB-A- 2 451 008
- US-A- 3 827 976
- US-A- 5 403 479
- US-A- 5 720 869
- US-A1- 2012 073 823
- US-A1- 2012 090 641
- DAVIS R ET AL: "MEMBRANES SOLVE NORTH SEA WATERFLOOD SULFATE PROBLEMS", OIL AND GAS JOURNAL, PENNWELL, HOUSTON, TX, US, vol. 94, no. 48, 25 novembre 1996 (1996-11-25), pages 59-64, XP000684467, ISSN: 0030-1388
- O'DONNELL K: "MEMBRANE TECHNOLOGY WORKS ON NORTH SEA PLATFORM", OIL AND GAS JOURNAL, PENNWELL, HOUSTON, TX, US, vol. 94, no. 49, 2 décembre 1996 (1996-12-02), XP000685103, ISSN: 0030-1388

## Description

### DOMAINE TECHNIQUE DE L'INVENTION

La présente invention se situe dans le domaine des applications sous-marines, en particulier dans le domaine pétrolier. L'invention concerne plus spécifiquement une unité sous-marine de traitement de l'eau possédant des moyens de nettoyages particuliers, ainsi qu'un procédé de nettoyage de la membrane de traitement de l'eau de l'unité sous-marine.

### ART ANTERIEUR

L'injection d'eau dans les gisements d'hydrocarbures est une technique bien connue dans le milieu pétrolier. Il s'agit d'une opération qui consiste à injecter dans un puits pétrolier de l'eau, couramment nommée eau d'injection, pour d'une part récupérer les hydrocarbures et d'autre part éviter l'effondrement du puits qui peut se produire en raison de la diminution de la pression du fait de l'extraction des hydrocarbures.

La provenance de l'eau d'injection dépend généralement de sa disponibilité et des contraintes autour du lieu de l'extraction d'hydrocarbures. Par exemple, dans le cas de l'extraction offshore, il est connu d'utiliser l'eau prélevée dans la mer. Des étapes de traitement sont cependant généralement indispensables pour obtenir à partir de l'eau de mer une eau dont la qualité est suffisante pour pouvoir être réintroduite dans la formation souterraine. L'eau d'injection est toujours obtenue à travers une étape de filtration, visant à réduire voire éliminer les matières en suspension, et d'une étape de désoxygenation. Souvent, un traitement supplémentaire sous forme de désulfatation est utilisé si le contenu de la formation souterraine est tel qu'une réduction des ions de sulfates est nécessaire.

L'eau d'injection peut également être de l'eau d'aquifère, de l'eau de rivière ou de lac, et éventuellement des eaux usées domestiques ou industrielles. Là aussi, des étapes de traitement peuvent être nécessaires pour obtenir une eau dont la qualité est compatible avec l'injection dans la formation souterraine.

Lorsque l'eau d'injection est de l'eau de mer, la présence de sulfates dans l'eau est typiquement problématique si la formation souterraine contient des ions baryum, calcium ou strontium. En effet, les ions sulfate forment avec les ions baryum, calcium ou strontium des dépôts minéraux (en anglais « scaling ») préjudiciables à une bonne extraction des hydrocarbures. En outre, la présence de sulfates peut être à l'origine de la génération par des bactéries de sulfure d'hydrogène (H₂S), gaz toxique et corrosif, qui peut provoquer la corrosion des canalisations utilisées pour la récupération des hydrocarbures. L'élimination des sulfates dans l'eau avant son injection dans la formation souterraine est donc souvent nécessaire.

Un procédé classique permettant l'élimination des sulfates dans l'eau consiste en un procédé membranaire de nanofiltration, qui retient les ions multivalents et laisse passer les ions monovalents. Un autre procédé classique permettant le dessalement de l'eau consiste en un procédé d'osmose inverse. De tels procédés sont, par exemple, décrits dans les demandes de brevet WO 2006/134367 et WO 2007/138327.

Généralement, on dispose les unités de traitement de l'eau à proximité du gisement d'hydrocarbures. Dans le cas de gisements sous-marins, ces unités sont classiquement installées en surface, sur la plateforme offshore d'extraction d'hydrocarbures ou sur des plateformes annexes flottantes, couramment nommées unités FPSO (acronyme de « Floating Production, Storage and Offloading » selon la terminologie anglo-saxonne, signifiant unité flottante de production, de stockage et d'expédition).

Un des problèmes majeurs liés à l'installation en surface d'unités de traitement de l'eau est l'encombrement. Ces unités prennent de la place. Or, la gestion de l'espace sur les plateformes en mer est délicate car l'espace est limité et beaucoup d'installations sont indispensables. On a donc besoin d'unités de traitement de l'eau qui nécessitent un espace minimal sur les plateformes en mer.

Une solution à ce problème a déjà été proposée dans l'art antérieur. Elle consiste à remplacer les unités de traitement existantes par des unités sous-marines, aptes à fonctionner sous l'eau. En particulier, la demande internationale de brevet WO 2009/122134 décrit une unité sous-marine de traitement de l'eau de mer. Le fait de mettre l'unité sous l'eau présente aussi un avantage en terme énergétique : le système placé dans un environnement sous-marin bénéficie d'une pression hydrostatique approximativement proportionnelle à la profondeur à laquelle il est situé. Le brevet US 7 600 567 et la demande de brevet GB 2 451 008 décrivent également une unité sous-marine de traitement de l'eau, pouvant être placée sous l'eau à une profondeur comprise entre 250 et 700 mètres.

La publication de Davis et al. ("Membranes solves North Sea waterflood sulfate problems", Oil & Gas Journal, Nov. 25, 1996;) décrit le fonctionnement, les structures et le développement des membranes de nanofiltration pour extraire les sulfates de l'eau de mer pour injection dans les puits pétroliers. La publication de Davis et al. décrit une unité de traitement de l'eau adaptée pour l'injection dans une formation souterraine contenant des hydrocarbures qui comprend une unité de nanofiltration.

La publication de O'Donnell ("Membrane technology works on North Sea platforms", Oil & Gas Journal, Dec. 2, 1996) décrit de façon plus détaillée la technologie membranaire testée sur la plateforme Brae A.

US 3 827 976 décrit un procédé de nettoyage d'une membrane d'osmose inverse. US 2012/0090641 décrit un procédé de nettoyage d'une membrane de filtration.

US 5 403 479 décrit un procédé et un système de nettoyage de la surface extérieure d'une membrane en fibres creuses.

WO 2012/049618 concerne l'extraction d'hydrocarbures et il décrit une méthode de traitement de l'eau à l'aide d'une membrane de filtration qui peut être une unité sous-marine (voir e.g. WO 2012/049618 p.12 1.27).

US 5 720 869 concerne la production d'une eau de haute pureté utilisée pour le nettoyage d'articles dont la surface doit être très pure.

WO 2011/140602 décrit un appareil de traitement d'eau comprenant un filtre céramique et un moyen pour faire passer de l'eau à travers le filtre céramique afin de filtrer l'eau.

Or, actuellement, les découvertes de gisements d'hydrocarbures de grande taille se font de plus en plus rares dans des zones de faibles et moyennes profondeurs d'eau, c'est à dire jusqu'à 500 mètres de profondeur. Dans le but d'assurer le renouvellement des réserves, il est nécessaire de développer de nouveaux gisements situés dans les grands fonds (c'est-à-dire à une profondeur comprise entre 500 et 1 500 mètres) et dans les ultra-grands fonds (c'est-à-dire au-delà de 1 500 mètres de profondeur).

Dans les faibles et moyennes profondeurs d'eau, les conditions de température, de salinité, ainsi que la faune aquatique ne sont pas radicalement différentes des conditions de surfaces. Par contre, dans les grands fonds et les ultra-grands fonds, la température de l'eau est d'environ 3°C à 5°C et la viscosité de l'eau augmente ainsi avec la profondeur. Par ailleurs, la pression augmente de 10MPa par tranche de 1000 mètres. Ainsi, les conditions environnementales auxquelles sont soumises les unités sous-marines de traitement de l'eau sont tout à fait particulières.

De plus, l'environnement sous-marin réel ne peut pas être défini uniquement par des conditions de pression et de température. Il s'agit d'un milieu complexe, avec des compositions chimiques variables, et surtout comprenant des micro-organismes spécifiques aux grands fonds et aux ultra-grands fonds.

Ces micro-organismes ont tendance à s'accrocher et à se développer sur certaines surfaces, et plus particulièrement à venir encrasser rapidement tout dispositif sous-marin. Ce phénomène d'encrassement d'origine biologique est désigné couramment par le terme anglo-saxon de « biofouling ». Il s'agit du phénomène de dégradation ou de détérioration d'une surface ou d'un objet laissé dans un milieu aquatique, comme typiquement en mer, par la croissance d'organismes vivants tels que des bactéries, des protozoaires, des algues et des crustacés.

Lorsqu'elles sont disposées à grande ou à ultra-grande profondeur, les unités sous-marines de traitement de l'eau, et en particulier les membranes de filtration qu'elles contiennent, sont donc soumises à des conditions environnementales très particulières.

Des moyens destinés à réduire, voire à supprimer, le colmatage des filtres sont connus par l'homme du métier. Par exemple, la demande de brevet WO 2012/049618 décrit un procédé de traitement d'eau qui permet de réduire les risques de colmatage des filtres membranaires grâce à un traitement du rétentat avant son recyclage. Selon un autre exemple, dans le brevet US 7 600 567 précédemment cité, il est décrit le lavage à contre-courant des membranes de filtration. Selon un mode de réalisation, l'eau de lavage peut être additionnée de gaz. Ce mode de réalisation n'est pas adapté dans le cas où les unités contenant les membranes de filtration sont situées à de grandes profondeurs. Un autre mode de réalisation consiste à ajouter à l'eau de lavage un biocide et/ou un agent anti-incrustation. Ces produits chimiques sont majoritairement des molécules organiques. A l'issue de la phase de lavage, elles sont rejetées dans l'environnement et sont donc susceptibles d'entraîner des problèmes écologiques, d'autant plus que les membranes de filtration sont situées à de grandes et d'ultra-grandes profondeurs où le milieu biologique est encore mal connu.

Il serait donc avantageux de réduire l'utilisation de ces moyens classiques de nettoyage dans les conditions environnementales très particulières auxquelles les unités situées dans les grands fonds et les ultra-grands fonds sont soumises.

Par ailleurs, dans le cas d'unités de traitement de l'eau de mer en vue d'être utilisée comme eau d'injection dans un puits pétrolier, lesdites unités doivent de préférence rester opérationnelles plusieurs mois, voire plusieurs années sans aucune intervention. En outre, il est préférable que l'unité soit la plus robuste possible de façon à diminuer le nombre d'interventions de maintenance indispensables.

Il est donc nécessaire de disposer d'une unité de traitement adaptée à ces conditions environnementales très particulières des grands fonds et des ultra-grands fonds.

Par ailleurs, des moyens classiques de nettoyage de membranes de filtration sont décrits dans les publications scientifiques de Davis et al. ("Membranes solve North Sea waterflood sulfate problems" Oil & Gas Journal, Nov. 25, 1996) et de O'Donnell ("Membrane technology works on North Sea platform" Oil & Gas Journal, Dec. 2, 1996), et dans les brevets et demandes de brevet US 3 827 976, US 5 403 479 et US 2012/0090641. Ces documents ne présentent pas de solution au problème particulier posé ici par les conditions environnementales.

C'est dans ce contexte que les inventeurs ont découvert une solution alternative, avantageuse d'un point de vue écologique, permettant de procéder à un lavage des membranes de filtration à l'aide de solutions acides et/ou alcalines dans des conditions sous-marines. Peu agressives pour l'environnement, et utilisées en solutions très diluées, les solutions acides et/ou alcalines peuvent éventuellement être rejetées dans l'environnement après utilisation. Cependant, l'invention prévoit aussi des moyens qui permettent d'éviter le rejet de ces solutions dans l'environnement.

### RESUME DE L'INVENTION

Ces objectifs, parmi d'autres, sont résolus par la présente invention qui a pour objet une unité sous-marine de traitement de l'eau adaptée à l'injection dans un gisement d'hydrocarbures comprenant :
- un moyen pour alimenter l'unité sous-marine en énergie ;
- un système sous-marin de traitement de l'eau comprenant au moins une membrane de filtration, une prise d'eau adaptée pour faire entrer dans l'unité sous-marine un flux d'eau prélevé dans l'environnement du système, une conduite reliant ladite prise d'eau et ladite membrane de filtration, une conduite d'évacuation de l'eau traitée, et au moins une pompe d'alimentation adaptée pour réaliser la filtration de l'eau ;
- un circuit hydraulique de nettoyage de ladite membrane, formant une boucle entre l'entrée et la sortie de ladite membrane, et possédant une conduite d'évacuation ;
- au moins deux réservoirs de stockage d'eau, chaque réservoir d'eau étant connecté au circuit de nettoyage ;
- au moins un réservoir de stockage d'un produit de nettoyage choisi parmi un acide et une base, le réservoir de produit de nettoyage étant connecté au circuit de nettoyage ;
- au moins une pompe de nettoyage adaptée pour mettre en mouvement des fluides dans le circuit de nettoyage ;
ladite membrane de filtration étant équipée d'au moins un moyen de chauffage, et au moins un des réservoirs d'eau étant équipée d'au moins un moyen de chauffage du réservoir.

L'invention a en outre pour objet un procédé de nettoyage de la membrane de filtration d'une unité sous-marine telle que définie précédemment, le procédé étant tel que défini dans la revendication 8.

### DESCRIPTION DES FIGURES

La **figure 1** est une représentation schématique d'un mode de réalisation de l'unité sous-marine de traitement de l'eau selon l'invention.
La **figure 2** est une représentation schématique d'un mode de réalisation des moyens de nettoyage d'une unité selon l'invention.

### DESCRIPTION DETAILLEES DE L'INVENTION

Dans la présent demande, l'expression « compris(e) entre ... et ... » doit être entendue comme incluant les bornes.

L'unité sous-marine selon l'invention est conçue pour traiter de l'eau, de façon à ce que cette eau puisse être injectée dans un gisement d'hydrocarbures. L'eau qui est traitée est de préférence de l'eau de mer, et l'eau obtenue est de l'eau d'injection.

Pour réaliser le traitement de l'eau, l'unité sous-marine selon l'invention comprend tout d'abord un moyen pour alimenter l'unité sous-marine en énergie et un système sous-marin de traitement de l'eau. Ledit système de traitement de l'eau comprenant au moins une membrane de filtration, une prise d'eau adaptée pour faire entrer dans l'unité sous-marine un flux d'eau prélevé dans l'environnement du système, une conduite reliant ladite prise d'eau et ladite membrane de filtration, une conduite d'évacuation de l'eau traitée, et au moins une pompe d'alimentation adaptée pour réaliser la filtration de l'eau.

Les membranes de filtration sont des dispositifs bien connus de l'homme du métier qui permettent une séparation de différents composants d'un flux liquide. La nature de la séparation est déterminée en partie par la dimension des pores des membranes.

Selon la classification IUPAC :
- une membrane de microfiltration présente des macropores dont le diamètre est supérieur à 50 nm,
- une membrane d'ultrafiltration présente des mésopores dont le diamètre est compris entre 2 nm et 50 nm,
- une membrane de nanofiltration présente des micropores dont le diamètre est inférieur à 2 nm.

D'autre part, les membranes d'osmose sont des membranes particulières, bien connues de l'homme du métier. Une membrane d'osmose est une membrane semi-perméable ne laissant passer que le solvant (en général l'eau), et pas les autres substances en solution.

La membrane de filtration dans la présente invention peut être une membrane de microfiltration, une membrane d'ultrafiltration, une membrane de nanofiltration, ou bien une membrane d'osmose inverse. De plus, selon un mode de réalisation plus avantageux, la membrane de filtration dans la présente l'invention est une membrane pour désulfatation. Par « membrane pour désulfatation », on entend dans la présente invention une membrane permettant la séparation des ions sulfate de l'eau. Il s'agit d'un mode de réalisation particulièrement avantageux pour l'industrie pétrolière, car ces membranes permettent l'élimination des sulfates dans l'eau de mer destinée à être réinjectée dans les formations souterraines contenant des hydrocarbures.

Parmi les membranes de nanofiltration pour désulfatation de l'eau de mer, on peut citer, entre autres, les membranes SR90 de DOW Filmtec et les NANO-SW de Hydranautics.

Le système sous-marin de traitement de l'eau peut comprendre plusieurs membranes de filtration, disposés en série et/ou en parallèle, qui sont identiques ou différentes. Selon un mode de réalisation préféré, le système sous-marin de traitement de l'eau comprend une membrane de nanofiltration, et une membrane d'ultrafiltration, ladite membrane d'ultrafiltration étant située en amont de ladite membrane de nanofiltration. Le système sous-marin de traitement de l'eau peut alors comprendre, dans l'ordre par rapport à l'écoulement normal du flux d'eau dans le système :
- une prise d'eau ;
- une conduite reliant ladite prise d'eau et une membrane d'ultrafiltration ;
- ladite membrane d'ultrafiltration ;
- une conduite reliant ladite membrane d'ultrafiltration et une membrane de nanofiltration ;
- ladite membrane de nanofiltration ; puis
- d'une part, une conduite d'évacuation en aval de ladite membrane de nanofiltration ; et d'autre part, une conduite d'évacuation du rétentat de la membrane de nanofiltration.

Selon un autre mode de réalisation, le système sous-marin de traitement de l'eau comprend une membrane de microfïltration et/ou une membrane d'ultrafiltration.

En outre, le système sous-marin de traitement de l'eau peut comprendre d'autres filtres, qui peuvent par exemple être sélectionnés parmi un tamis et un préfiltre. Un tamis est une grille ayant un maillage plus ou moins fin ou une surface percée de trous. Un tamis a généralement pour fonction de séparer des particules solides de tailles différentes d'un flux liquide, la taille des particules séparées dépendant de la taille du maillage ou des trous du filtre. On désigne par le terme « préfiltre » un filtre susceptible d'arrêter les particules solides de dimensions relativement élevées, c'est-à-dire supérieures à 100 micromètres. Le préfiltre permet une filtration grossière.

Le flux d'eau entre dans le système sous-marin de traitement de l'eau via une prise d'eau. Une prise d'eau est un système classique comprenant une ouverture permettant de laisser entrer un flux d'eau dans le système. La prise d'eau peut éventuellement être équipée d'une crépine retenant les éléments solides de gros diamètre, évitant ainsi un bouchage rapide du système de filtration par de gros éléments.

L'emplacement de la prise d'eau détermine la qualité de l'eau qui rentre dans le système sous-marin de traitement de l'eau. La prise d'eau peut avantageusement être mobile, par exemple au moyen d'un système télescopique, qui permet de faire varier l'emplacement de la prise d'eau sans modifier l'emplacement de l'unité sous-marine de traitement de l'eau elle-même. En particulier, un système télescopique ou un enrouleur peuvent permettre de déplacer le niveau de la prise d'eau, repéré par rapport au fond de l'eau ou à la surface.

Dans le système sous-marin de traitement de l'eau de la présente invention, la membrane de filtration peut être disposée dans un module spécifique comprenant deux chambres, une première chambre en amont de la membrane de filtration et une seconde chambre en aval de la membrane de filtration, la membrane de filtration formant cloison entre les deux chambres. La première chambre en amont est équipée d'au moins un conduit permettant l'entrée du flux d'eau. La seconde chambre en aval est équipée d'au moins un conduit d'évacuation. Eventuellement, la première chambre en amont est aussi également équipée d'un second conduit d'évacuation. Le dimensionnement des chambres amont et aval peut être réalisé par l'homme du métier en particulier en fonction de la nature du filtre et de la nature et du débit du flux à filtrer.

Classiquement, le flux d'eau peut être amené dans la première chambre du filtre par un conduit d'alimentation. La fraction du flux traversant le filtre et parvenant dans la seconde chambre, en aval du filtre, est couramment nommée le filtrat. La fraction du flux qui est retenu par le filtre est couramment nommée le rétentat. Selon la nature du filtre, le rétentat peut être solide, liquide, ou un mélange des deux.

Pour faire circuler l'eau à travers le filtre, le système sous-marin de traitement de l'eau selon l'invention comprend au moins une pompe adaptée pour réaliser la filtration de l'eau. Ladite pompe peut être située sur la conduite reliant la prise d'eau et le filtre. La pompe peut être commandée par un système électronique. Ce système électronique peut être commandé par un programme pré-enregistré qui ne nécessite pas l'intervention d'un opérateur. Alternativement, il peut être commandé par un opérateur, posté de préférence en surface, et les informations échangées entre l'opérateur et de système électronique peuvent être transmises via un câble ou par voie dématérialisée (par exemple, par ondes, notamment radio dans l'air ou bien acoustiques dans l'eau).

La conduite d'évacuation en aval du filtre a pour fonction d'évacuer le filtrat du système. Ce filtrat constitue l'eau traitée adaptée pour être utilisée comme eau d'injection dans un gisement d'hydrocarbures. La conduite d'évacuation du filtrat est donc de préférence reliée à un puits d'extraction d'hydrocarbures.

Eventuellement, le système sous-marin de traitement de l'eau selon l'invention peut comprendre une conduite d'évacuation du rétentat du filtre. On préfère ne pas récupérer le rétentat et celui-ci est donc de préférence relâché directement dans l'environnement, à proximité du système sous-marin de traitement de l'eau.

Pour pouvoir réaliser les différentes étapes de traitement, et en particulier pour pouvoir faire fonctionner la pompe d'alimentation adaptée pour réaliser la filtration de l'eau, le système sous-marin de traitement de l'eau, et plus généralement l'ensemble de l'unité sous-marine de traitement de l'eau a besoin d'une source d'énergie. C'est pourquoi l'unité sous-marine de traitement de l'eau comprend un moyen pour alimenter ladite unité sous-marine en énergie.

Selon un premier mode de réalisation, l'unité sous-marine de traitement de l'eau est alimenté en énergie depuis la surface via un ombilical. Un ombilical est un dispositif bien connu dans le domaine de la production pétrolière sous-marine. L'ombilical peut conduire un courant électrique. Il peut donc alimenter en électricité l'unité sous-marine de traitement de l'eau depuis la surface. En particulier, l'ombilical peut relier l'unité sous-marine de traitement de l'eau à une unité de commande située à flots, typiquement un bateau ou une plate-forme flottante, par exemple à l'aplomb de l'unité sous-marine de traitement de l'eau immergée, ou bien en champ satellite à plusieurs dizaines de kilomètres de l'unité de surface. Le même ombilical peut assurer plusieurs fonctions à la fois. Typiquement, le même ombilical peut servir de voie pour l'alimentation électrique de l'unité sous-marine de traitement de l'eau et pour la transmission de commandes.

Selon un second mode de réalisation, l'unité sous-marine de traitement de l'eau est autonome électriquement et est alimentée en énergie grâce à une batterie située dans l'unité sous-marine de traitement de l'eau. La présence de batteries n'est pas préférée en raison de leur volume et de leur poids. Toutefois, ce mode de réalisation présente l'avantage de rendre l'unité sous-marine de traitement de l'eau autonome et facilement déplaçable.

L'unité sous-marine de traitement de l'eau peut se présenter de préférence sous une forme compacte, à l'exception éventuellement de la prise d'eau et de la conduite d'évacuation qui peuvent s'étendre au-delà de la structure. Les dimensions de cette structure peuvent être comprises entre 8 m (longueur) × 5 m (largeur) × 5 m (hauteur) et 20 m (longueur) × 10 m (largeur) × 15 m (hauteur). Le poids total de l'unité hors de l'eau peut être compris entre 100 tonnes et 800 tonnes.

L'unité sous-marine de traitement de l'eau est destinée à être placée sous l'eau à au moins 500 mètres, notamment au moins 800 mètres de profondeur. La profondeur de l'unité sous-marine de traitement de l'eau est de façon préférée comprise entre 800 mètres et 3000 mètres, de façon plus préférée comprise entre 1000 mètres et 3000 mètres, et de façon encore plus préféré entre 1500 mètres et 3000 mètres.

De préférence, l'unité sous-marine de traitement de l'eau est placée dans la mer, et le flux d'eau prélevé dans l'environnement est un flux d'eau de mer.

L'unité sous-marine de traitement de l'eau est soumise à une pression extérieure comprise de façon préférée entre 80 et 300 bars, cette pression étant bien sûr fonction de la profondeur à laquelle est installée l'unité sous-marine de traitement de l'eau. La température existante à l'endroit où est installée l'unité sous-marine de traitement de l'eau est aussi fonction de la profondeur à laquelle se trouve l'unité sous-marine de traitement de l'eau, mais aussi plus généralement du lieu géographique où est placée l'unité sous-marine de traitement de l'eau. Par exemple, si l'unité sous-marine de traitement de l'eau est installée à 3000 mètres de profondeur dans le Golfe de Guinée, la température de l'eau sera d'environ 4°C. Si l'unité sous-marine de traitement de l'eau est installée à 500 mètres de profondeur, notamment à 800 mètres, en mer d'Arctique, la température de l'eau sera d'environ - 2°C. De façon générale, l'unité sous-marine de traitement de l'eau est soumise à une température extérieure comprise entre 20°C et --2°C, de préférence entre 14 °C et - 2°C.

En milieu marin, il est bien connu que la durée de vie et la capacité de filtration des membranes de filtration peuvent être fortement réduites par le phénomène de biofouling qui provoque le colmatage des filtres. Or, les moyens classiques de nettoyage des membranes de filtration se sont révélés inadaptés aux conditions environnementales très particulières auxquelles est soumise une unité sous-marine de traitement de l'eau située dans les grands fonds et les ultra-grands fonds.

Le nettoyage *in situ* permet de diminuer la fréquence d'intervention sur les membranes de filtration (soit pour les remplacer, soit pour les nettoyer).

C'est pourquoi l'unité sous-marine de traitement de l'eau selon la présente invention comprend en outre des moyens particuliers de nettoyages.

L'unité sous-marine de traitement de l'eau comprend :
- un circuit hydraulique de nettoyage de ladite membrane, formant une boucle entre l'entrée et la sortie de ladite membrane, et possédant une conduite d'évacuation ;
- au moins deux réservoirs de stockage d'eau, chaque réservoir d'eau étant connecté au circuit de nettoyage ;
- au moins un réservoir de stockage d'un produit de nettoyage choisi parmi un acide et une base, le réservoir de produit de nettoyage étant connecté au circuit de nettoyage ;
- au moins une pompe de nettoyage adaptée pour mettre en mouvement des fluides dans le circuit de nettoyage.

En outre, la membrane de filtration du système sous-marin de traitement de l'eau est équipée d'au moins un moyen de chauffage, et au moins un des réservoirs d'eau étant équipé d'au moins un moyen de chauffage du réservoir.

Le circuit hydraulique de nettoyage selon l'invention forme, à l'aide de conduites appropriées, un circuit fermé dont fait partie la membrane de filtration. Le circuit hydraulique de nettoyage comprend une conduite d'évacuation, qui peut être contrôlée par une vanne. Tant que cette vanne d'évacuation est maintenue fermée, un flux liquide peut être mis en circulation dans le circuit hydraulique de nettoyage, et il s'écoule suivant cette boucle de façon continue, en traversant continuellement la membrane de filtration. L'ouverture de la vanne d'évacuation permet de rompre la boucle, et d'évacuer le flux liquide hors du circuit hydraulique de nettoyage, par exemple lorsque le nettoyage est terminé.

Selon un mode de réalisation préféré, le système sous-marin de traitement de l'eau comprend une membrane de nanofiltration, et une membrane d'ultrafiltration, ladite membrane d'ultrafiltration étant située en amont de ladite membrane de nanofiltration. Dans ce cas, le circuit hydraulique de nettoyage selon l'invention peut avantageusement former :
- une boucle entre l'entrée et la sortie de la membrane de nanofiltration, ou
- une boucle entre l'entrée et la sortie de la membrane d'ultrafiltration, ou
- deux boucles entre l'entrée et la sortie de la membrane de nanofiltration d'une part et entre l'entrée et la sortie de la membrane d'ultrafiltration d'autre part, des vannes étant situés sur les boucles pour permettre de sélectionner la membrane dont le nettoyage est désiré.

Le choix du nombre de boucles dans le circuit hydraulique de nettoyage peut dépendre du besoin en nettoyage de l'unité sous-marine de traitement de l'eau. Ce besoin peut varier en fonction du type de membranes de filtration utilisées, mais aussi en fonction de l'environnement aquatique de l'unité sous-marine de traitement de l'eau, par exemple la qualité de l'eau, sa température, sa pression, sa composition chimique et les micro-organismes qu'elle contient.

De préférence, lorsque le système sous-marin de traitement de l'eau comprend une membrane de nanofiltration et une membrane d'ultrafiltration, le circuit hydraulique de nettoyage forme de préférence deux boucles entre l'entrée et la sortie de la membrane de nanofiltration d'une part et entre l'entrée et la sortie de la membrane d'ultrafiltration d'autre part, des vannes étant situés sur les boucles pour permettre de sélectionner la membrane dont le nettoyage est désiré.

Les moyens de nettoyages de l'unité sous-marine selon l'invention comprennent un certain nombre de réservoirs de stockages. Au moins deux réservoirs de stockages sont destinés à stocker de l'eau. Au moins un réservoir de stockage est destiné à stocker un produit de nettoyage choisi parmi un acide et une base.

Les réservoirs sont adaptés pour remplir leur fonction de stockage dans un milieu aquatique, à la température et à la pression auxquelles l'unité sous-marine de traitement de l'eau est soumise. Le dimensionnement des réservoirs peut être calculé par l'homme du métier en fonction de la quantité d'eau et de produit de nettoyage nécessaire pour réaliser le nettoyage de la membrane de filtration, pendant la durée désirée. De préférence, les réservoirs sont dimensionnés de façon à ce que l'unité sous-marine soit autonome pendant au moins six mois. L'encombrement n'étant pas une contrainte limitante dans le cadre d'une unité de traitement de l'eau sous-marine, on préfère les équipements robustes, nécessitant le moins possible de maintenance.

Dans un mode de réalisation particulier, le(s) réservoir(s) de stockage sont flexibles en conséquence de quoi ils s'effondrent ou s'aplatissent lorsque le fluide se retire lors de la vidange du réservoir.

Dans un autre mode de réalisation particulier, le(s) réservoir(s) de stockage flexibles sont entourés d'une coquille rigide leur permettant de supporter de faibles surpressions et permettant à l'eau de circuler au sein de la structure rigide lorsque le réservoir s'effondre.

Chaque réservoir est connecté au circuit de nettoyage. De préférence, une vanne est disposée à la sortie de chaque réservoir, de façon à pouvoir contrôler l'ouverture et la fermeture de chaque réservoir.

L'acide utilisable comme produit de nettoyage peut être un acide organique ou minéral. Il peut être choisi parmi les composés classiques connus par l'homme du métier. Il peut en particulier être choisi dans le groupe constitué par l'acide citrique et l'acide chlorhydrique. Les acides sont adaptés pour dissoudre les dépôts minéraux.

La base utilisable comme produit de nettoyage peut être une organique ou minérale, de préférence une base minéral. Elle peut être choisie parmi les composés classiques connus par l'homme du métier. Elle peut en particulier être choisie parmi la soude caustique ou un détergent ayant une formulation chimique exclusive. Les bases sont spécialement élaborées pour éliminer la colonisation organique ou les résidus microbiens. Les produits de nettoyage sont de préférence sous la forme de solutions aqueuses concentrées, la concentration peut être comprise entre 1 % et 4%.

Selon un mode de réalisation préféré, l'unité sous-marine comprend au moins deux réservoirs de stockage pour produit de nettoyage, au moins l'un des réservoirs étant un réservoir de stockage pour un acide et au moins l'un des réservoirs étant un réservoir de stockage pour une base, les réservoirs d'acide et de base étant connectés au circuit de nettoyage.

De façon générale, l'unité sous-marine de traitement de l'eau est soumise à des conditions de pressions et de températures particulières du fait de son immersion. Tout particulièrement, l'unité sous-marine de traitement de l'eau est soumise à une température extérieure comprise entre 20°C et -2°C, de préférence entre 14 °C et -2°C. Les inventeurs ont constaté que, dans ces conditions, les moyens de nettoyage devaient être adaptés.

C'est pourquoi l'unité sous-marine de traitement de l'eau comprend en outre des moyens de chauffage. La membrane de filtration du système sous-marin de traitement de l'eau est équipée d'au moins un moyen de chauffage, et au moins un des réservoirs d'eau étant équipé d'au moins un moyen de chauffage du réservoir.

Ces moyens de chauffage permettent avantageusement de procéder à un nettoyage de la membrane de filtration à une température supérieure de la température extérieure. Les moyens de chauffage peuvent être disposés de façon appropriée, à proximité de la membrane de filtration pour chauffer la membrane de filtration et à proximité ou dans le réservoir d'eau pour chauffer l'eau qu'il contient.

Les moyens de chauffage peuvent être alimentés en énergie par le moyen d'alimentation de l'unité sous-marine.

On peut par exemple chauffer à un endroit de la boucle de circulation et maintenir une circulation de liquide chaud à travers la membrane de filtration.

Alternativement, les moyens de chauffage sont tels qu'ils permettent de chauffer l'eau entourant la membrane de filtration plutôt que de chauffer directement sur la boucle de circulation.

Selon un mode de réalisation préféré, l'unité sous-marine de traitement de l'eau comprend au moins trois réservoirs de stockage d'eau, au moins deux des réservoirs d'eau étant équipés d'au moins un moyen de chauffage du réservoir.

L'unité sous-marine de traitement de l'eau comprend en outre au moins une pompe de nettoyage adaptée pour mettre en mouvement des fluides dans le circuit de nettoyage. Cette pompe de nettoyage peut être alimentée en énergie par le moyen d'alimentation de l'unité sous-marine. La pompe de nettoyage est de préférence disposée sur le circuit hydraulique de nettoyage.

Avantageusement, la pompe d'alimentation et la pompe de nettoyage peuvent être montées sur le même arbre. Ce mode de réalisation permet d'augmenter la robustesse de l'unité sous-marine selon l'invention. Ceci représente un avantage important car la maintenance de l'unité, lorsqu'elle est immergée à grande ou ultra-grande profondeur, est complexe et coûteuse.

L'unité sous-marine de traitement de l'eau selon l'invention peut donc être utilisée pour traiter un flux d'eau prélevé dans le milieu aquatique de l'unité, et pour le traiter de façon à être utilisable comme eau d'injection. En fonctionnement normal, le procédé de traitement de l'eau à l'aide de l'unité sous-marine selon l'invention peut comprenant les étapes consistant à :
- faire entrer un flux d'eau dans d'unité sous-marine de traitement de l'eau via la prise d'eau ;
- amener ce flux dans le système sous-marin de traitement de l'eau jusqu'à la membrane de filtration ;
- obtenir un filtrat en aval de ladite membrane de filtration ; et
- injecter ledit filtrat au moins en partie dans un gisement d'hydrocarbures.

L'unité sous-marine de traitement peut être placée sous l'eau à au moins 500 mètres de profondeur. En outre, le gisement d'hydrocarbures dans lequel l'eau traitée est injectée est de préférence un gisement offshore.

La membrane de filtration peut être nettoyée de temps en temps pour maintenir ses capacités de filtration et prévenir son colmatage.

La présente invention a pour objet un procédé de nettoyage de la membrane d'une unité sous-marine telle que définie précédemment, comprenant les étapes consistant à :
a) interrompre l'arrivée d'eau dans la membrane de filtration ;
b) injecter dans le circuit hydraulique de nettoyage de l'eau contenue dans un des réservoirs d'eau, et faire circuler cette eau en boucle dans le circuit hydraulique de nettoyage à l'aide de la pompe de nettoyage ;
c) chauffer la membrane à l'aide du moyen de chauffage jusqu'à une température comprise entre 15°C et 40°C ;
d) injecter un produit de nettoyage contenu dans au moins un réservoir de stockage dans le circuit hydraulique de nettoyage ;
e) évacuer le contenu du circuit hydraulique de nettoyage via la conduite d'évacuation ;
f) injecter à nouveau dans le circuit hydraulique de nettoyage de l'eau contenue dans un des réservoirs d'eau, et faire circuler cette eau en boucle dans le circuit hydraulique de nettoyage ;
g) évacuer à nouveau le contenu du circuit hydraulique de nettoyage via la conduite d'évacuation.

L'étape a) consiste à interrompre l'arrivée d'eau dans la membrane de filtration. Si l'on souhaite ne pas pour autant interrompre la production d'eau traitée pour injection, il est possible de prévoir plusieurs membranes de filtration et/ou plusieurs systèmes de traitement de l'eau, disposés en parallèles dans la même unité sous-marine.

Une fois la membrane isolée du circuit normale de traitement de l'eau, on injecte, dans une étape b), dans le circuit hydraulique de nettoyage de l'eau contenue dans un des réservoirs d'eau, et faire circuler cette eau en boucle dans le circuit hydraulique de nettoyage à l'aide de la pompe de nettoyage.

De préférence, l'eau injectée lors de l'étape b) dans le circuit hydraulique est à la même température que la membrane de filtration. La membrane de filtration est alors a priori à la température ambiante extérieure puisqu'elle était en contact avec de l'eau prélevée dans le milieu extérieur lors du procédé normal de traitement de l'eau. L'eau injectée lors de l'étape b) dans le circuit hydraulique est donc de préférence à la température ambiante extérieure, qui peut être comprise entre 20 °C et -2 °C, de préférence entre 14°C et -2°C. Cette eau peut de préférence être de l'eau traitée ayant été obtenue par le procédé de traitement de l'eau grâce à l'unité sous-marine elle-même.

La durée de l'étape b) peut être déterminée par l'homme du métier, de façon à ce que le débit d'eau dans le circuit hydraulique de nettoyage soit constant.

L'étape c) du procédé de nettoyage selon l'invention consiste alors à chauffer la membrane de filtration à l'aide du moyen de chauffage jusqu'à une température comprise entre 15°C et 40°C. Cette étape est réalisée en mettant en marche le moyen de chauffage situé à proximité de la membrane de filtration. La circulation de l'eau dans le circuit hydraulique de nettoyage étant maintenue, le chauffage de la membrane de filtration entraine aussi le chauffage de l'eau circulant dans le circuit hydraulique de nettoyage. Alternativement, cette étape peut être réalisée en chauffant à un endroit de la boucle de circulation et en maintenant une circulation de liquide chaud à travers la membrane de filtration. L'étape c) est de préférence terminée lorsque la membrane de filtration et l'eau circulant dans le circuit hydraulique de nettoyage ont atteint une température stable désirée. L'homme du métier peut déterminer la durée de cette étape c) en fonction, en particulier, de la température initiale de la membrane et de l'eau, du volume, du débit de l'eau et de la puissance de chauffage. La température que l'on souhaite atteindre lors de l'étape c) peut être définie en fonction de la nature du produit de nettoyage qui est injecté lors de l'étape postérieure d).

Lorsque l'étape c) est terminée, on injecte lors de l'étape d) un produit de nettoyage contenu dans au moins un réservoir de stockage dans le circuit hydraulique de nettoyage. L'injection peut être contrôlée au moyen d'une vanne située à l'entrée du réservoir de stockage. La quantité de produit de nettoyage injecté peut dépendre de la nature du produit, de sa concentration dans le réservoir de stockage et de l'effet de nettoyage désiré.

Durant l'étape c), la circulation de l'eau dans le circuit hydraulique de nettoyage est maintenue. Le produit de nettoyage se dilue ou se disperse dans l'eau. Le moyen de chauffage de la membrane de filtration est maintenu en fonctionnement de façon à ce que la température reste stable.

La membrane de filtration est alors traversée par un flux contenant du produit de nettoyage. La circulation de ce flux est maintenue dans le circuit hydraulique de nettoyage pendant un temps suffisant pour que le nettoyage de la membrane de filtration soit effectif.

Au terme de ce nettoyage, le contenu du circuit hydraulique de nettoyage est évacué lors de l'étape e) du procédé de nettoyage via la conduite d'évacuation. Le contenu du circuit hydraulique de nettoyage peut être évacué directement dans le milieu environnant l'unité sous-marine de traitement de l'eau, en particulier directement dans la mer, lorsque les produits de nettoyage utilisés se sont pas nocifs pour la faune et la flore présente dans l'environnement. Alternativement, lorsque le rejet des produits de nettoyage risque de poser un problème environnemental, le contenu du circuit hydraulique de nettoyage peut être évacué dans les réservoirs d'eau vidangés suite à l'étape b). L'évacuation peut être contrôlée grâce à une vanne située sur la conduite d'évacuation.

L'unité peut donc comprendre en outre une conduite d'évacuation permettant d'évacuer le contenu du circuit hydraulique de nettoyage dans le(s) réservoir(s) d'eau.

Lorsque la totalité du contenu du circuit hydraulique de nettoyage a été évacué, la conduite d'évacuation peut être refermée et on injecte, dans une étape f), à nouveau dans le circuit hydraulique de nettoyage de l'eau contenue dans un des réservoirs d'eau, et faire circuler cette eau en boucle dans le circuit hydraulique de nettoyage. Cette étape f) permet avantageusement de rincer la membrane de filtration, et de la débarrasser des éventuels restes de produit de nettoyage. Cette eau injectée dans le circuit hydraulique de nettoyage lors de l'étape f) peut de préférence être de l'eau traitée ayant été obtenue par le procédé de traitement de l'eau grâce à l'unité sous-marine elle-même. La durée de l'étape f) de rinçage peut être déterminée par un homme du métier pour que le rinçage soit effectif.

Dans un mode de réalisation particulier, les étapes e) et f) sont réalisées simultanément.

A l'issue de cette étape f), on évacue à nouveau le contenu du circuit hydraulique de nettoyage via la conduite d'évacuation lors de l'étape g). Le contenu du circuit hydraulique de nettoyage est de préférence évacué directement dans le milieu environnant l'unité sous-marine de traitement de l'eau, en particulier directement dans la mer. L'évacuation peut être contrôlée grâce à une vanne située sur la conduite d'évacuation.

A l'issue de l'étape g), la membrane de filtration peut avantageusement être remise en service. Elle peut de nouveau être utilisée dans le procédé de traitement de l'eau. Il est possible de rouvrir l'arrivée d'eau prélevé dans l'environnement.

Le procédé de nettoyage peut être mis en œuvre de façon ponctuelle, ou, de préférence, de façon régulière dans le temps. Le procédé de nettoyage selon l'invention peut être mis en œuvre à une fréquence comprise entre une fois par semaine, et une fois par an, plus préférentiellement entre une fois par mois et une fois tous les six mois.

Le procédé de nettoyage selon l'invention est particulièrement adapté au nettoyage de membranes de filtration dans les conditions atypiques liées à l'utilisation à grande ou ultra-grande profondeur. Les objectifs de l'invention, qui sont de parvenir à un nettoyage efficace, sans pour autant causer de dommage à l'environnement, et sans nécessiter de maintenance complexe et coûteuse, sont résolus par le procédé de la présente invention, qui comprend en particulier une étape de chauffage de la membrane de filtration.

Certaines membranes de filtration, en particulier les membranes d'ultrafiltration, peuvent toutefois être endommagées par choc thermique. Un choc thermique peut avoir lieu lorsque la membrane est chauffée, lors de l'étape c) du procédé selon l'invention, et/ou lorsque le nettoyage est terminé et que la membrane est remise en service pour reprendre le traitement de l'eau dans le système de traitement de l'eau de l'unité.

Pour prévenir les chocs thermiques, l'augmentation de la température est de préférence faite lentement lors de l'étape c) du procédé de nettoyage selon l'invention.

En outre, pour éviter les chocs thermiques dus à la diminution de la température, l'eau injectée dans le circuit hydraulique de nettoyage lors de l'étape f) est de chauffée à une température comprise entre 15°C et 40°C grâce au moyen de chauffage du ou des réservoir(s) de stockage d'eau. Le procédé de nettoyage comprend en outre une étape consistant à chauffer l'eau injectée dans le circuit hydraulique de nettoyage dans l'étape f) à une température comprise entre 15°C et 40°C grâce au moyen de chauffage du ou des réservoir(s) contenant l'eau. Cette étape peut être réalisée en mettant en marche le moyen de chauffage situé à proximité ou dans ledit réservoir. Avantageusement, la température de l'eau peut être la même que la température de la membrane de filtration atteinte lors de l'étape c). Cette étape de chauffage peut être mise en œuvre au moment adéquat pour que l'eau soit la température désirée au moment de mettre en œuvre l'étape f).

Lorsque cette eau de rinçage circule en boucle dans le circuit hydraulique de nettoyage, le moyen de chauffage de la membrane de filtration est de préférence arrêté. L'étape de rinçage peut alors de préférence être poursuivie pendant une durée suffisante pour que la température de la membrane de filtration et de l'eau en circulation dans le circuit hydraulique de nettoyage diminue, jusqu'à de préférence atteindre la température ambiante extérieure. Le refroidissement est fait de préférence lentement et naturellement, par contact avec le milieu extérieur.

De préférence, le produit de nettoyage injecté dans le circuit hydraulique de nettoyage lors de l'étape d) est un acide, et de façon plus préférée, le produit de nettoyage injecté dans le circuit hydraulique de nettoyage lors de l'étape d) est de l'acide citrique. Le nettoyage à l'acide de la membrane de filtration permet de dissoudre les dépôts minéraux qui peuvent colmater la membrane. Lorsque le produit de nettoyage injecté dans le circuit hydraulique de nettoyage lors de l'étape d) est un acide, la température atteinte lors de l'étape c) est de façon préférée comprise entre 20°C et 40°C et de façon plus préférée comprise entre 25°C et 35°C.

Alternativement, le produit de nettoyage injecté dans le circuit hydraulique de nettoyage lors de l'étape d) est une base. Le nettoyage à la base de la membrane de filtration permet d'éliminer les matières organiques et microbiennes. Lorsque le produit de nettoyage injecté dans le circuit hydraulique de nettoyage lors de l'étape d) est une base, la température atteinte lors de l'étape c) est de façon préférée comprise entre 20°C et 40°C, de façon plus préférée comprise entre 30°C et 40°C, et de façon encore plus préférée entre 35°C et 40°C.

Selon un mode de réalisation de la présente invention, la membrane de filtration peut être nettoyée plusieurs fois, de façon successive, avec différents produits de nettoyage. Le procédé de nettoyage selon l'invention peut comprendre, entre l'étape f) et l'étape g), les étapes consistant à :
d') injecter dans le circuit hydraulique de nettoyage un produit de nettoyage différent du produit injecté lors de l'étape d), ledit produit étant contenu dans au moins un réservoir de stockage ;
e') évacuer le contenu du circuit hydraulique de nettoyage via la conduite d'évacuation ; et
f') injecter à nouveau dans le circuit hydraulique de nettoyage de l'eau contenue dans un des réservoirs de stockage d'eau, et faire circuler cette eau en boucle dans le circuit hydraulique de nettoyage.

Les étapes d') à f') correspondent aux étapes d) à f), à la différence que le produit de nettoyage injecté lors de l'étape d') est différent du produit de nettoyage injecté lors de l'étape d). Les étapes d') à f') sont comme décrites précédemment pour les étapes d) à f). En particulier, l'eau injectée dans le circuit hydraulique de nettoyage lors de l'étape f') est chauffée à une température comprise entre 15°C et 40°C grâce au moyen de chauffage du ou des réservoir(s) contenant l'eau.

Selon un mode de réalisation préféré, comprenant les étapes a) à f), puis d') à f'), puis g), le produit de nettoyage injecté dans le circuit hydraulique de nettoyage lors de l'étape d) peut être une base et le produit de nettoyage injecté dans le circuit hydraulique de nettoyage lors de l'étape d') peut être un acide. Ce mode de réalisation peut être avantageux pour réaliser un nettoyage plus efficace qu'un nettoyage réalisé avec un seul produit de nettoyage. La fréquence du nettoyage peut donc être plus grande.

Le procédé de nettoyage peut de préférence comprendre ultérieurement, après l'étape g), les étapes consistant à :
h) reprendre le traitement de l'eau dans le système de traitement de l'eau de l'unité ; et
i) remplacer l'eau qui a été utilisée lors des étapes b) et f), et éventuellement f'), en injectant de l'eau obtenue en sortie du système de traitement dans les réservoirs de stockage d'eau.

Il est entendu que, si le système sous-marin de traitement de l'eau comprend plusieurs membranes de filtration, un procédé de nettoyage peut être mis en œuvre pour chacune desdites membranes, chaque procédé de nettoyage étant de préférence adapté à chaque membrane. Chaque procédé de nettoyage peut en outre être réalisé à des fréquences différentes.

Un des avantages du procédé de nettoyage selon l'invention est qu'il peut être entièrement automatisé. Chaque étape du procédé peut être déclenchée sans intervention humaine directe, par des systèmes électroniques. Ceci est particulièrement avantageux dans la mesure où l'unité sous-marine de traitement de l'eau est située dans l'eau à grande profondeur. Toute intervention directe requiert soit l'utilisation de robots sous-marins, soit de remonter l'unité à la surface, ce qui dans tous les cas, représente une opération logue, délicate, et coûteuse. Selon un mode de réalisation, le procédé peut être commandé à distance par un opérateur, posté de préférence en surface, et les informations échangées entre l'opérateur et de système électronique peuvent être transmises via un câble (par exemple un ombilical) ou par voie dématérialisée (par exemple, par ondes). Selon un autre mode de réalisation, le système électronique peut être commandé par un programme pré-enregistré qui ne nécessite pas l'intervention d'un opérateur.

En outre, l'unité sous-marine de traitement de l'eau selon l'invention peut comprendre un ou plusieurs autres moyens destinés à réduire, voire à supprimer, le colmatage de la membrane de filtration. Ces moyens peuvent être choisi dans le groupe constitué par un circuit de recyclage reliant la conduite d'évacuation de l'eau traitée à la conduite en amont de la membrane de filtration, un circuit de lavage à contre-courant, et un ou plusieurs réservoirs de biocide, au moins l'un de ces réservoirs étant disposé de façon à permettre l'injection de biocide dans la conduite reliant la prise d'eau et le filtre, de préférence à proximité de la prise d'eau.

Un circuit de recyclage reliant la conduite d'évacuation de l'eau traitée à la conduite en amont de la membrane de filtration permet d'amener une partie du filtrat recueilli à la sortie de la membrane de filtration jusqu'au flux d'eau qui est destiné à traverser ladite membrane de filtration. Ce système de recyclage a pour effet de diluer le flux d'eau destiné à traverser la membrane de filtration, ce qui d'une part augmente le débit du flux entrant, et d'autre part améliore la qualité du flux d'eau entrant, facilitant ainsi sa filtration.

Le lavage à contre-courant est une méthode connue pour nettoyer les filtres. Elle consiste à faire circuler un flux d'eau en sens opposé au sens d'écoulement du flux d'eau à travers le filtre en marche normale. Ce faisant, l'eau circulant à contre-courant peut emporter avec elle les éléments plus ou moins gros qui colmatent le filtre. Une étape de lavage à contre-courant peut comprendre l'arrêt de l'arrivée normale du flux d'eau dans la membrane de filtration, l'entrée d'un flux d'eau dans le système sous-marin de traitement de l'eau via une seconde prise d'eau, la conduite de ce flux jusqu'à la face de la membrane de filtration est initialement du côté aval, la récupération d'un flux en amont de ladite membrane de filtration et le rejet dudit flux dans l'environnement via une seconde conduite d'évacuation. Alternativement, lorsque le système sous-marin de traitement de l'eau comprend plusieurs membranes de filtration en parallèle, l'étape de lavage à contre-courant peut consister à amener la totalité du flux d'eau entrant dans le système sous-marin de traitement de l'eau vers une seule des membranes de filtration, à récupérer au moins une partie du filtrat de ce filtre et à conduire ce filtrat jusqu'à la face aval d'une seconde membrane de filtration située en parallèle de la première via la conduite normale d'évacuation du filtrat de cette seconde membrane de filtration, puis à récupérer ce flux en amont de ladite membrane de filtration et à rejeter ledit flux dans l'environnement via une conduite d'évacuation du rétentat de la seconde membrane de filtration.

L'injection de biocide dans le flux d'eau s'écoulant dans le système sous-marin de traitement de l'eau selon invention permet de réduire le phénomène de biofouling. Les biocides bien connus pour cette application sont par exemple le DBNPA (dibromo-nitrolo-proprionamide) ou l'Isothiazoline.

Avantageusement, l'invention permet de réduire les quantités de biocide utilisées pour le nettoyage des membranes dans les procédés de l'art antérieur, voire de supprimer complètement leur utilisation.

D'autres caractéristiques et avantages de la présente invention ressortiront de la description de modes de réalisation particuliers représentés dans les figures.

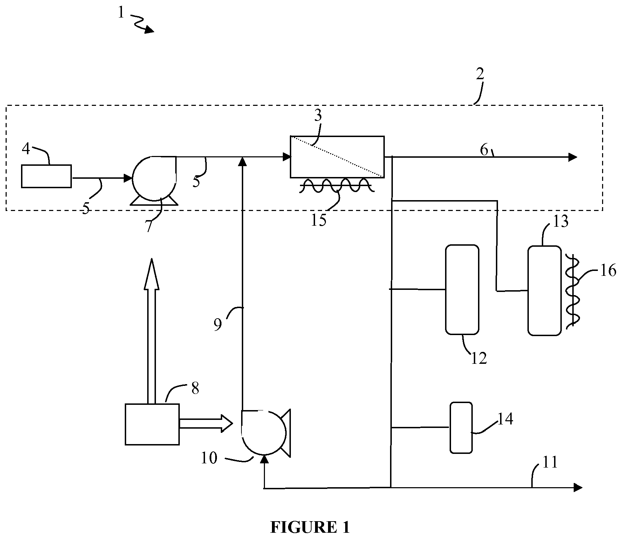

La **figure 1** représente schématiquement un mode de réalisation de l'unité sous-marine de traitement de l'eau selon l'invention.

L'unité sous-marine de traitement de l'eau **1** comprend un système sous-marin de traitement de l'eau **2**, comprenant lui-même une membrane de filtration **3**, une prise d'eau **4** adaptée pour faire entrer un flux d'eau prélevé dans l'environnement, une conduite **5** reliant la prise d'eau **4** à la membrane de filtration **3**, une conduite d'évacuation **6** et une pompe d'alimentation **7**, qui est disposée sur la conduite **5** reliant la prise d'eau **4** à la membrane de filtration **3**.

L'unité sous-marine de traitement de l'eau **1** comprend également un moyen 8 pour alimenter l'unité sous-marine en énergie, en particulier pour alimenter la pompe d'alimentation **7**, et la pompe de nettoyage **10**.

En outre, l'unité sous-marine de traitement de l'eau **1** comprend un circuit hydraulique de nettoyage **9**, et une pompe de nettoyage **10** disposée sur le circuit hydraulique de nettoyage **9**. Le circuit hydraulique de nettoyage **9** forme une boucle qui comprend la membrane de filtration **3**. Le circuit hydraulique comprend également une conduite d'évacuation **11**.

L'unité sous-marine de traitement de l'eau **1** comprend également deux réservoirs de stockage d'eau **12** et **13** et un réservoir de stockage de produit de nettoyage **14**. Chaque réservoir est connecté au circuit hydraulique de nettoyage **9**.

Enfin, dans le mode de réalisation représente sur la **figure 1**, seuls la membrane de filtration **3** et le réservoir de stockage d'eau **13** sont équipée de moyens de chauffage **15** et **16**.

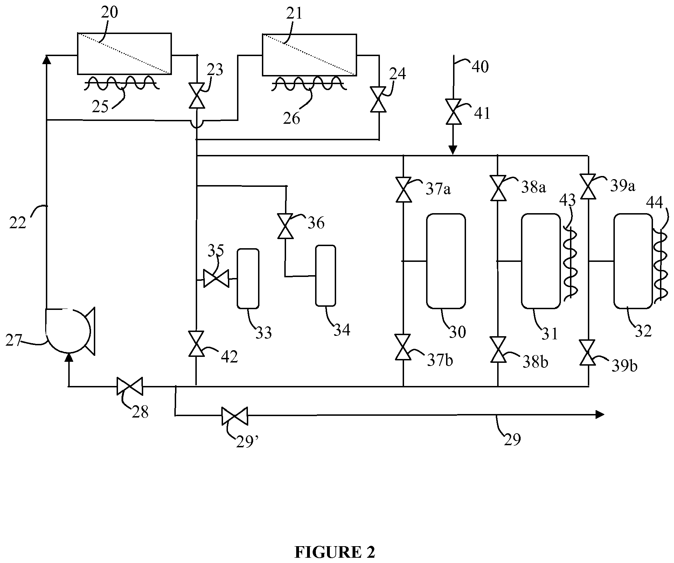

La **figure 2** est une représentation schématique d'un mode de réalisation des moyens de nettoyage d'une unité selon l'invention.

Sur cette figure sont représentées deux membranes de filtration **20** et **21**, la membrane **20** peut être une membrane d'ultrafiltration, et la membrane **21** peut être une membrane de nanofiltration.

Le circuit hydraulique de nettoyage **22** forme deux boucles, une première boucle incluant la membrane de filtration **20**, et une seconde boucle incluant la membrane de filtration **21**. L'ouverture et la fermeture de la circulation des fluides dans ces deux boucles sont contrôlées à l'aide des vannes **23** et **24**. Lorsqu'on souhaite nettoyer la membrane de filtration **20**, on ouvre la vanne **23** et on ferme la vanne **24**. A l'inverse, lorsqu'on souhaite nettoyer la membrane de filtration **21**, on ouvre la vanne **24** et on ferme la vanne **23**.

Chaque membrane est équipée d'un moyen de chauffage **25** et **26**.

Une pompe de nettoyage **27** est disposée sur le circuit hydraulique de nettoyage **22**. En outre, le circuit hydraulique de nettoyage **22** comprend une vanne **28** qui permet de contrôler la circulation de flux dans le circuit hydraulique de nettoyage **22**, et une conduite d'évacuation **29**, qui dispose d'une vanne **29'**.

Les moyens de nettoyage comprennent également trois réservoirs d'eau **30**, **31** et **32**, et deux réservoirs de produit de nettoyage **33** et **34**. Chaque réservoir est connecté au circuit hydraulique de nettoyage **22**. Les vannes **35** et **36** sont disposées en entrée des réservoirs **33** et **34** de produits de nettoyage, pour permettre le contrôle de l'injection de produit de nettoyage dans le circuit hydraulique de nettoyage **22**. Les réservoirs de stockage d'eau **30**, **31** et **32** sont quant à eux équipés de paires de vannes **37a**/**37b**, **38a**/**38b** et **39a**/**39b**. Ces paires de vannes permettre avantageusement de contrôler l'injection d'eau dans le circuit hydraulique de nettoyage **22**, mais également, elles permettent le remplissage des réservoirs **30**, **31** et **32** par un flux d'eau provenant de la conduite **40**. De préférence, l'eau arrivant par la conduite **40** est de l'eau obtenue en sortie du système de traitement de l'eau. Le remplissage des réservoirs peut être contrôlé par la vanne **41** et par la vanne **42**.

Les réservoirs de stockage d'eau **31** et **32** sont équipés de moyens de chauffage **43** et **44**.

A titre d'exemple, un procédé de nettoyage selon l'invention de la membrane de filtration **20** est décrit ci-après.

Pour nettoyer la membrane de filtration **20**, on ouvre la vanne **23** et on ferme la vanne **24**. La membrane de filtration **20** est isolée du système de traitement de l'eau. Les vannes **28** et **42** sont ouvertes, tandis que la vanne d'évacuation **29'** est fermée. Le circuit hydraulique de nettoyage **22** forme alors une boucle, qui comprend la membrane de filtration **20**. En outre, les vannes **35**, **36**, **37a**/**37b**, **38a**/**38b** et **39a**/**39b** sont fermées, ainsi que la vanne **41**.

On injecte dans le circuit hydraulique de nettoyage **22** l'eau contenue dans le réservoir **30**, en ouvrant la vanne **37b**. L'eau est à température ambiante extérieure. Cette eau est mise en circulation dans le circuit hydraulique de nettoyage **22** à l'aide de la pompe de nettoyage **27**.

On met en marche le moyen de chauffage **25**. Celui-ci va permettre d'élever la température de la membrane de filtration **20** et de l'eau circulant dans le circuit hydraulique de nettoyage **22** jusqu'à une température comprise entre 15°C et 40°C.

Lorsque cette température est atteinte, on injecte un produit de nettoyage contenu dans le réservoir de stockage **33** dans le circuit hydraulique de nettoyage **22**, en ouvrant la vanne **35**.

Lorsque le nettoyage de la membrane est suffisant, on évacue le contenu du circuit hydraulique de nettoyage **22** via la conduite d'évacuation **29** en ouvrant la vanne **29'**. L'étape d'évacuation finie, on referme la vanne **29'**.

Ensuite, on injecte à nouveau dans le circuit hydraulique de nettoyage de l'eau contenue dans le réservoir **31**, en ouvrant la vanne **38b**. L'eau contenue dans le réservoir **31** est à la température de la membrane de filtration **20**, c'est à dire à une température comprise entre 15°C et 40°C. Cette température a été atteinte en chauffant le réservoir à l'aide du moyen réchauffage **43**. Cette eau est toujours mise en circulation dans le circuit hydraulique de nettoyage **22** à l'aide de la pompe de nettoyage **27**.

Lorsque le rinçage de la membrane de filtration **20** est terminé, on évacue à nouveau le contenu du circuit hydraulique de nettoyage **22** via la conduite d'évacuation **29** en ouvrant la vanne **29'**. L'étape d'évacuation finie, on referme la vanne **29'**.

Le procédé de nettoyage étant alors terminé, on peut reprendre le traitement de l'eau dans le système de traitement de l'eau à l'aide de la membrane de filtration **20**. En outre, on peut éventuellement remplacer l'eau qui a été utilisée en injectant dans les réservoirs de stockage d'eau **30** et **31** via la conduite **40** de l'eau obtenue en sortie du système de traitement. Pour cela, on ouvre les vannes **37a**, **38a** et **41**, et on maintient fermé les vannes **37b**, **38b** et **42**.

A titre d'exemple, un second procédé de nettoyage selon l'invention de la membrane de filtration **21** est décrit ci-après.

Pour nettoyer la membrane de filtration **21**, on ouvre la vanne **24** et on ferme la vanne **23**. La membrane de filtration **21** est isolée du système de traitement de l'eau. Les vannes **28** et **42** sont ouvertes, tandis que la vanne d'évacuation **29'** est fermée. Le circuit hydraulique de nettoyage **22** forme alors une boucle, qui comprend la membrane de filtration **21**. En outre, les vannes **35**, **36**, **37a**/**37b**, **38a**/**38b** et **39a**/**39b** sont fermées, ainsi que la vanne **41**.

On injecte dans le circuit hydraulique de nettoyage **22** l'eau contenue dans le réservoir **30**, en ouvrant la vanne **37b**. L'eau est à température ambiante extérieure. Cette eau est mise en circulation dans le circuit hydraulique de nettoyage **22** à l'aide de la pompe de nettoyage **27**.

On met en marche le moyen de chauffage **26**. Celui-ci va permettre d'élever la température de la membrane de filtration **21** et de l'eau circulant dans le circuit hydraulique de nettoyage **22** jusqu'à une température comprise entre 15°C et 40°C.

Lorsque cette température est atteinte, on injecte un produit de nettoyage contenu dans le réservoir de stockage **34** dans le circuit hydraulique de nettoyage **22**, en ouvrant la vanne **36**.

Lorsque le nettoyage de la membrane est suffisant, on évacue le contenu du circuit hydraulique de nettoyage **22** via la conduite d'évacuation **29** en ouvrant la vanne **29'**. L'étape d'évacuation finie, on refermer la vanne **29'**.

Ensuite, on injecte à nouveau dans le circuit hydraulique de nettoyage de l'eau contenue dans le réservoir **31**, en ouvrant la vanne **38b**. L'eau contenue dans le réservoir **31** est à une température de la membrane de filtration **21**, c'est à dire entre 15°C et 40°C. Cette température a été atteinte en chauffant le réservoir **31** à l'aide du moyen réchauffage **43**. Cette eau est toujours mise en circulation dans le circuit hydraulique de nettoyage **22** à l'aide de la pompe de nettoyage **27**.

Lorsque le rinçage de la membrane de filtration **21** est terminé, on injecte cette fois le produit de nettoyage contenu dans le réservoir de stockage **33** dans le circuit hydraulique de nettoyage **22**, en ouvrant la vanne **35**.

Lorsque le nettoyage de la membrane est suffisant, on évacue le contenu du circuit hydraulique de nettoyage **22** via la conduite d'évacuation **29** en ouvrant la vanne **29'**. L'étape d'évacuation finie, on refermer la vanne **29'**.

Ensuite, on injecte à nouveau dans le circuit hydraulique de nettoyage de l'eau contenue dans le réservoir **32**, en ouvrant la vanne **39b**. L'eau contenue dans le réservoir **32** est à la température de la membrane de filtration **21**, c'est à dire entre 15°C et 40°C. Cette température a été atteinte en chauffant le réservoir à l'aide du moyen réchauffage **44**. Cette eau est toujours mise en circulation dans le circuit hydraulique de nettoyage **22** à l'aide de la pompe de nettoyage **27**.

Lorsque le rinçage de la membrane de filtration **21** est terminé, on évacue à nouveau le contenu du circuit hydraulique de nettoyage **22** via la conduite d'évacuation **29** en ouvrant la vanne **29'**. L'étape d'évacuation finie, on refermer la vanne **29'**.

Le procédé de nettoyage étant alors terminé, on peut reprendre le traitement de l'eau dans le système de traitement de l'eau à l'aide de la membrane de filtration **21**. En outre, on remplace l'eau qui a été utilisée en injectant dans les réservoirs de stockage d'eau **30**, **31** et **32** via la conduite **40** de l'eau obtenue en sortie du système de traitement. Pour cela, on ouvre les vannes **37a**, **38a**, **39a** et **41**, et on maintient fermé les vannes **37b**, **38b**, **39b** et **42**.

## Revendications

1. Unité sous-marine de traitement de l'eau (1) adaptée à l'injection dans un gisement d'hydrocarbures comprenant :
- un moyen pour alimenter l'unité sous-marine (1) en énergie ;
- un système sous-marin de traitement de l'eau (2) comprenant au moins une membrane de filtration (3), une prise d'eau (4) adaptée pour faire entrer dans l'unité sous-marine (1) un flux d'eau prélevé dans l'environnement du système, une conduite (5) reliant ladite prise d'eau (4) et ladite membrane de filtration (3), une conduite d'évacuation (6) de l'eau traitée, et au moins une pompe d'alimentation (7) adaptée pour réaliser la filtration de l'eau ;
- un circuit hydraulique de nettoyage (9) de ladite membrane (3), formant une boucle entre l'entrée et la sortie de ladite membrane (3), et possédant une conduite d'évacuation (11) ;
- au moins deux réservoirs de stockage d'eau (12, 13), chaque réservoir d'eau étant connecté au circuit de nettoyage ;
- au moins un réservoir de stockage d'un produit de nettoyage (14) choisi parmi un acide et une base, le réservoir de produit de nettoyage (14) étant connecté au circuit de nettoyage (9) ;
- au moins une pompe de nettoyage (10) adaptée pour mettre en mouvement des fluides dans le circuit de nettoyage ;
ladite membrane de filtration (3) étant équipée d'au moins un moyen de chauffage (15), et au moins un des réservoirs d'eau (12, 13) étant équipée d'au moins un moyen de chauffage du réservoir (16).

2. Unité sous-marine (1) selon la revendication 1, **caractérisée en ce que** la membrane de filtration (3) est une membrane de microfiltration, une membrane d'ultrafiltration, une membrane de nanofiltration, ou une membrane d'osmose inverse.

3. Unité sous-marine (1) selon la revendication 2, **caractérisée en ce que** le système de traitement de l'eau comprend une membrane de nanofiltration et une membrane d'ultrafiltration située en amont de ladite membrane de nanofiltration, le circuit hydraulique de nettoyage (9) formant :
- une boucle entre l'entrée et la sortie de la membrane de nanofiltration, ou
- une boucle entre l'entrée et la sortie de la membrane d'ultrafiltration, ou
- deux boucles entre l'entrée et la sortie de la membrane de nanofiltration d'une part et entre l'entrée et la sortie de la membrane d'ultrafiltration d'autre part, des vannes étant situés sur les boucles pour permettre de sélectionner la membrane dont le nettoyage est désiré.

4. Unité sous-marine (1) selon l'une quelconque des revendications 1 à 3, **caractérisée en ce qu'**elle comprend au moins deux réservoirs de stockage pour produit de nettoyage, au moins l'un des réservoirs étant un réservoir de stockage pour un acide et au moins l'un des réservoirs étant un réservoir de stockage pour une base, les réservoirs d'acide et de base étant connectés au circuit de nettoyage.

5. Unité sous-marine (1) selon l'une quelconque des revendications 1 à 4, **caractérisée en ce qu'**elle comprend au moins trois réservoirs de stockage d'eau, au moins deux des réservoirs d'eau étant équipés d'au moins un moyen de chauffage du réservoir.

6. Unité sous-marine (1) selon l'une quelconque des revendications 1 à 5, **caractérisée en ce que** la pompe d'alimentation (7) et la pompe de nettoyage (10) sont montées sur le même arbre.

7. Unité sous-marine (1) selon l'une quelconque des revendications 1 à 6, **caractérisée en ce qu'**elle comprend en outre une conduite d'évacuation permettant d'évacuer le contenu du circuit hydraulique de nettoyage (9) dans le(s) réservoir(s) de stockage d'eau.

8. Procédé de nettoyage de la membrane de filtration (3) d'une unité sous-marine (1) telle que définie dans l'une quelconque des revendications 1 à 7, comprenant les étapes consistant à :
a) interrompre l'arrivée d'eau dans ladite membrane de filtration (3) ;
b) injecter dans le circuit hydraulique de nettoyage (9) de l'eau contenue dans un des réservoirs de stockage d'eau (12, 13), et faire circuler cette eau en boucle dans le circuit hydraulique de nettoyage (9) à l'aide de la pompe de nettoyage (10);
c) chauffer la membrane de filtration (3) à l'aide du moyen de chauffage (15) jusqu'à une température comprise entre 15°C et 40°C, le chauffage de la membrane de filtration (3) entrainant le chauffage de l'eau circulant dans le circuit hydraulique de nettoyage (9) ;
d) injecter un produit de nettoyage contenu dans au moins un réservoir de stockage (14) dans le circuit hydraulique de nettoyage (9) en maintenant le moyen de chauffage (15) de la membrane de filtration (3) en fonctionnement de façon à ce que la température reste stable ;
e) évacuer le contenu du circuit hydraulique de nettoyage (9) via la conduite d'évacuation (11) ;
f) injecter à nouveau dans le circuit hydraulique de nettoyage (9) de l'eau contenue dans un des réservoirs de stockage d'eau (12, 13), et faire circuler cette eau en boucle dans le circuit hydraulique de nettoyage (9) ;
g) évacuer à nouveau le contenu du circuit hydraulique de nettoyage (9) via la conduite d'évacuation (11) ;
dans lequel l'eau injectée dans le circuit hydraulique de nettoyage (9) lors de l'étape f) est chauffée à une température comprise entre 15°C et 40°C grâce au moyen de chauffage (16) du ou des réservoir(s) de stockage d'eau (12, 13).

9. Procédé de nettoyage selon la revendication 8, **caractérisé en ce que** le produit de nettoyage injecté dans le circuit hydraulique de nettoyage (9) lors de l'étape d) est un acide.

10. Procédé de nettoyage selon l'une ou l'autre des revendications 8 ou 9, **caractérisé en ce qu'**il comprend, entre l'étape f) et l'étape g), les étapes consistant à :
d') injecter dans le circuit hydraulique de nettoyage (9) un produit de nettoyage différent du produit injecté lors de l'étape d), ledit produit étant contenu dans au moins un réservoir de stockage ;
e') évacuer le contenu du circuit hydraulique de nettoyage (9) via la conduite d'évacuation (11) ; et
f') injecter à nouveau dans le circuit hydraulique de nettoyage (9) de l'eau contenue dans un des réservoirs de stockage d'eau, et faire circuler cette eau en boucle dans le circuit hydraulique de nettoyage,
dans lequel l'étape d') est réalisée en maintenant le moyen de chauffage (15) de la membrane de filtration (3) en fonctionnement de façon à ce que la température reste stable, et
dans lequel l'eau injectée dans le circuit hydraulique de nettoyage lors de l'étape f') est chauffée à une température comprise entre 15°C et 40°C grâce au moyen de chauffage (16) du ou des réservoir(s) de stockage d'eau (12, 13).

11. Procédé de nettoyage selon la revendication 10, **caractérisé en ce que** le produit de nettoyage injecté dans le circuit hydraulique de nettoyage (9) lors de l'étape d) est une base et le produit de nettoyage injecté dans le circuit hydraulique de nettoyage (9) lors de l'étape d') est un acide.

12. Procédé de nettoyage selon l'une quelconque des revendications 8 à 11, **caractérisé en ce qu'**il comprend ultérieurement les étapes consistant à :
h) reprendre le traitement de l'eau dans le système de traitement de l'eau de l'unité ; et
i) remplacer l'eau qui a été utilisée lors des étapes b) et f), et éventuellement f'), en injectant de l'eau obtenue en sortie du système de traitement dans les réservoirs de stockage d'eau.

13. Procédé de nettoyage selon l'une quelconque des revendications 8 à 12, **caractérisé en ce que** l'unité sous-marine de traitement de l'eau (1) est placée sous l'eau, à au moins 500 mètres de profondeur.

14. Procédé de nettoyage selon l'une quelconque des revendications 8 à 13, **caractérisé en ce que** le contenu du circuit hydraulique de nettoyage (9) est évacué dans le(s) réservoir(s) de stockage d'eau vidangé(s) suite à l'étape b).

## Patentansprüche

1. Unterwassereinheit (1) zur Behandlung des Wassers, das zur Injektion in ein Kohlenwasserstoff-Vorkommen angepasst ist, umfassend:
- ein Mittel zur Energieversorgung der Unterwassereinheit (1);
- ein Unterwassersystem (2) zur Behandlung des Wassers, umfassend wenigstens eine Filtrationsmembran (3), eine Wasseraufnahme (4), die dazu eingerichtet ist, einen aus der Umgebung des Systems entnommenen Wasserstrom in die Unterwassereinheit (1) einzuleiten, eine Leitung (5), welche die Wasseraufnahme (4) und die Filtrationsmembran (3) verbindet, eine Ablaufleitung (6) für das behandelte Wasser und wenigstens eine Förderpumpe (7), die zur Durchführung der Filtration des Wassers eingerichtet ist;
- einen hydraulischen Reinigungskreislauf (9) für die Membran (3), der eine Schleife zwischen dem Einlass und dem Auslass der Membran (3) bildet und eine Ablaufleitung (11) aufweist;
- wenigstens zwei Wasservorratsbehälter (12, 13), wobei jeder Wasserbehälter an den Reinigungskreislauf angeschlossen ist;
- wenigstens einen Vorratsbehälter (14) für ein Reinigungsmittel, ausgewählt aus einer Säure und einer Base, wobei der Vorratsbehälter (14) für das Reinigungsmittel an den Reinigungskreislauf (9) angeschlossen ist;
- wenigstens eine Reinigungspumpe (10), die dafür ausgelegt ist, Fluide im Reinigungskreislauf in Bewegung zu setzen;
wobei die Filtrationsmembran (3) mit wenigstens einem Heizmittel (15) ausgestattet ist, und wobei wenigstens einer der Wasserbehälter (12, 13) mit wenigstens einem Heizmittel (16) für den Behälter ausgestattet ist.

2. Unterwassereinheit (1) nach Anspruch 1, **dadurch gekennzeichnet, dass** die Filtrationsmembran (3) eine Mikrofiltrationsmembran, eine Ultrafiltrationsmembran, eine Nanofiltrationsmembran oder eine Umkehrosmose-Membran ist.

3. Unterwassereinheit (1) nach Anspruch 2, **dadurch gekennzeichnet, dass** das System zur Behandlung des Wassers eine Nanofiltrationsmembran und eine der Nanofiltrationsmembran vorgeschaltete Ultrafiltrationsmembran aufweist, wobei der hydraulische Reinigungskreislauf (9) bildet:
- eine Schleife zwischen dem Einlass und dem Auslass der Nanofiltrationsmembran, oder
- eine Schleife zwischen dem Einlass und dem Auslass der Ultrafiltrationsmembran, oder
- zwei Schleifen zwischen dem Einlass und dem Auslass der Nanofiltrationsmembran einerseits und zwischen dem Einlass und dem Auslass der Ultrafiltrationsmembran andererseits, wobei Ventile an den Schleifen angeordnet sind, um die Auswahl derjenigen Membran zu ermöglichen, deren Reinigung erwünscht ist.

4. Unterwassereinheit (1) nach einem der Ansprüche 1 bis 3, **dadurch gekennzeichnet, dass** sie wenigstens zwei Vorratsbehälter für Reinigungsmittel aufweist, wobei wenigstens einer der Behälter ein Vorratsbehälter für eine Säure ist und wenigstens einer der Behälter ein Vorratsbehälter für eine Base ist, wobei der Säurebehälter und der Basenbehälter mit dem Reinigungskreislauf verbunden sind.

5. Unterwassereinheit (1) nach einem der Ansprüche 1 bis 4, **dadurch gekennzeichnet, dass** sie wenigstens drei Wasservorratsbehälter umfasst, wobei wenigstens zwei der Wasserbehälter mit wenigstens einem Heizmittel für den Behälter ausgestattet sind.

6. Unterwassereinheit (1) nach einem der Ansprüche 1 bis 5, **dadurch gekennzeichnet, dass** die Förderpumpe (7) und die Reinigungspumpe (10) auf derselben Welle gelagert sind.

7. Unterwassereinheit (1) nach einem der Ansprüche 1 bis 6, **dadurch gekennzeichnet, dass** sie ferner eine Ablaufleitung umfasst, die es ermöglicht, den Inhalt des hydraulischen Reinigungskreislaufs (9) in den (die) Wasservorratsbehälter abzuführen.

8. Reinigungsverfahren für die Filtrationsmembran (3) einer Unterwassereinheit (1) nach einem der Ansprüche 1 bis 7, umfassend die Schritte, bestehend aus:
a) Unterbrechen der Ankunft von Wasser in der Filtrationsmembran (3);
b) Injizieren des in einem der Wasservorratsbehälter (12, 13) enthaltenen Wassers in den hydraulischen Reinigungskreislauf (9) und Umwälzen dieses Wassers in einer Schleife im hydraulischen Reinigungskreislauf (9) unter Verwendung der Reinigungspumpe (10);
c) Erwärmen der Filtrationsmembran (3) unter Verwendung des Heizmittels (15) bis auf eine Temperatur zwischen 15°C und 40°C; wobei das Erwärmen der Filtrationsmembran (3) die Erwärmung des in dem hydraulischen Reinigungskreislauf (9) umlaufenden Wassers herbeiführt,
d) Injizieren eines in wenigstens einem Vorratsbehälter (14) enthaltenen Reinigungsmittels in den hydraulischen Reinigungskreislauf (9), wobei das Heizmittel (15) der Filtrationsmembran (3) in Betrieb gehalten wird, so dass die Temperatur stabil bleibt;
e) Abführen des Inhalts des hydraulischen Reinigungskreislaufs (9) über die Ablaufleitung (11);
f) erneutes Injizieren des in einem der Wasservorratsbehälter (12, 13) enthaltenen Wassers in den hydraulischen Reinigungskreislauf (9), und Umwälzen dieses Wassers in einer Schleife im hydraulischen Reinigungskreislauf (9);
g) erneutes Abführen des Inhalts des hydraulischen Reinigungskreislaufs (9) über die Ablaufleitung (11),
wobei das im Schritt f) in den hydraulischen Reinigungskreislauf (9) injizierte Wasser aufgrund des Heizmittels (16) für den oder die Wasserbehälter (12, 13) auf eine Temperatur zwischen 15°C und 40°C aufgeheizt wird.

9. Reinigungsverfahren nach Anspruch 8, **dadurch gekennzeichnet, dass** das im Schritt d) in den hydraulischen Reinigungskreislauf (9) injizierte Reinigungsmittel eine Säure ist.

10. Reinigungsverfahren nach einem der Ansprüche 8 oder 9, **dadurch gekennzeichnet, dass** es zwischen Schritt f) und Schritt g) die folgenden Schritte umfasst:
d') Injizieren eines Reinigungsmittels in den hydraulischen Reinigungskreislauf (9), das sich von dem in Schritt d) injizierten Mittel unterscheidet, wobei das Mittel in wenigstens einem Vorratsbehälter enthalten ist;
e') Abführen des Inhalts des hydraulischen Reinigungskreislaufs (9) über die Ablaufleitung (11); und
f') erneutes Injizieren des in einem der Wasservorratsbehälter enthaltenen Wassers in den hydraulischen Reinigungskreislauf (9), und Umwälzen dieses Wassers in einer Schleife im hydraulischen Reinigungskreislauf;
wobei der Schritt d') ausgeführt wird, wobei das Heizmittel (15) für die Filtrationsmembran (3) in Betrieb gehalten wird, so dass die Temperatur stabil bleibt; und
wobei das im Schritt f') in den hydraulischen Reinigungskreislauf injizierte Wasser aufgrund des Heizmittels (16) für den oder die Wasserbehälter (12, 13) auf eine Temperatur zwischen 15°C und 40°C aufgeheizt wird.

11. Reinigungsverfahren nach Anspruch 10, **dadurch gekennzeichnet, dass** das im Schritt d) in den hydraulischen Reinigungskreislauf (9) injizierte Reinigungsmittel eine Base ist, und das im Schritt d') in den hydraulischen Reinigungskreislauf (9) injizierte Reinigungsmittel eine Säure ist.

12. Reinigungsverfahren nach einem der Ansprüche 8 bis 11, **dadurch gekennzeichnet, dass** es nachfolgend die Schritte umfasst, bestehend aus:
h) Wiederaufnahme der Behandlung des Wassers im System zur Behandlung des Wassers der Einheit; und
i) Ersetzen des in den Schritten b) und f) und gegebenenfalls f') verwendeten Wassers, indem das am Auslass des Systems zur Behandlung anfallende Wasser in die Wasservorratsbehälter injiziert wird.

13. Reinigungsverfahren nach einem der Ansprüche 8 bis 12, **dadurch gekennzeichnet, dass** die Unterwassereinheit (1) zur Behandlung des Wassers in einer Tiefe von wenigstens 500 Meter unter Wasser platziert wird.

14. Reinigungsverfahren nach einem der Ansprüche 8 bis 13, **dadurch gekennzeichnet, dass** der Inhalt des hydraulischen Reinigungskreislaufes (9) nach dem Schritt b) in den (die) entleerten Wasservorratsbehälter abgeführt wird.

## Claims

1. An underwater water treatment unit (1) suitable for injection into a hydrocarbon field, said unit including:
- means for supplying the underwater unit (1) with power;
- an underwater water treatment system (2) which includes at least one filtration membrane (3), a water intake (4) which is suitable to bring a flow of water drawn from the environment of the system into the underwater unit (1), a pipe (5) connecting said water intake (4) and said filtration membrane (3), a discharge pipe (6) for treated water and at least one supply pump (7) which is suitable for carrying out the water filtration;
- a hydraulic circuit for cleaning (9) said membrane (3), forming a loop between the inlet and the outlet of said membrane (3), and having a discharge pipe (6);
- at least two water storage tanks (12, 13), each water tank being connected to the cleaning circuit;
- at least one tank for storing a cleaning product (14) selected from among an acid and a base, the cleaning product tank (14) being connected to the cleaning circuit (9);
- at least one cleaning pump (10) which is suitable for setting the liquids in the cleaning circuit into motion;
said filtration membrane (3) being provided with at least one heating means (15), and at least one of the water tanks (12, 13) being provided with at least one means for heating the tank (16à.

2. The underwater unit (1) as claimed in claim 1, **characterized in that** the filtration membrane (3) is a microfiltration membrane, an ultrafiltration membrane, a nanofiltration membrane or a reverse osmosis membrane.

3. The underwater unit (1) as claimed in claim 2, **characterized in that** the water treatment system includes a nanofiltration membrane and an ultrafiltration membrane which is situated upstream of said nanofiltration membrane, the hydraulic cleaning circuit (9) forming:
- a loop between the inlet and the outlet of the nanofiltration membrane or
- a loop between the inlet and the outlet of the ultrafiltration membrane, or
- two loops between the inlet and the outlet of the nanofiltration membrane on the one hand and between the inlet and the outlet of the ultrafiltration membrane on the other hand, valves being situated in the loops in order to allow the membrane desired for cleaning to be selected.

4. The underwater unit (1) as claimed in any of claims 1 to 3, **characterized in that** said unit includes at least two storage tanks for the cleaning product, at least one of the tanks being a storage tank for an acid and at least one of the tanks being a storage tank for a base, the acid and base tanks being connected to the cleaning circuit.

5. The underwater unit (1) as claimed in any of claims 1 to 4, **characterized in that** said unit includes at least three water storage tanks, at least two of the water tanks being provided with at least one means for heating the tank.

6. The underwater unit (1) as claimed in any of claims 1 to 5, **characterized in that** the supply pump (7) and the cleaning pump (10) are mounted on the same shaft.

7. The underwater unit (1) as claimed in any of claims 1 to 6, **characterized in that** said unit further includes a discharge pipe which allows the contents of the hydraulic cleaning circuit (9) to be discharged into the water storage tank or tanks.

8. A method for cleaning the filtration membrane (3) of an underwater unit (1) such as defined in any one of claims 1 to 7, said method including the steps consisting in:
a) cutting off the inlet of water into said filtration membrane (3);
b) injecting water contained in one of the water storage tanks into the hydraulic cleaning circuit (9), and making said water circulate in a loop in the hydraulic cleaning circuit (9) using the cleaning pump (10);
c) heating the filtration membrane (3) up to a temperature of between 15°C and 40°C inclusive using the heating means (15), the heating of the filtration membrane (3) causing the water circulating in the hydraulic cleaning circuit (9) to heat;
d) injecting a cleaning product contained in at least one storage tank (14) into the hydraulic cleaning circuit (9) while keeping operating the heating means (15) of the filtration membrane (3) in such a manner that the temperature remains stable;
e) discharging the contents of the hydraulic cleaning circuit (9) via the discharge pipe (11);
f) injecting water contained in one of the water storage tanks (12, 13) into the hydraulic cleaning circuit (9) again, and making said water circulate in a loop in the hydraulic cleaning circuit (9);
g) discharging the contents of the hydraulic cleaning circuit (9) via the discharge pipe again (11);
wherein the water injected into the hydraulic cleaning circuit (9) during step f) is heated to a temperature of between 15°C and 40°C inclusive thanks to the heating means (16) of the water storage tank or tanks (12, 13).

9. The method for cleaning as claimed in claim 8, **characterized in that** the cleaning product injected into the hydraulic cleaning circuit (9) during step d) is an acid.

10. The method for cleaning as claimed in either of claims 8 or 9, **characterized in that** said method includes, between step f) and step g), the steps consisting in:
d') injecting a cleaning product that is different from the product injected during step d) into the hydraulic cleaning circuit (9), said product being contained in at least one storage tank;
e') discharging the contents of the hydraulic cleaning circuit (9) via the discharge pipe (11); and
f') injecting water contained in one of the water storage tanks into the hydraulic cleaning circuit again (9), and making said water circulate in a loop in the hydraulic cleaning circuit,
wherein step d') is performed while keeping operating the heating means (15) of the filtration membrane (3) in such a manner that the temperature remains stable,
wherein the water injected into the hydraulic cleaning circuit during step f) is heated to a temperature of between 15°C and 40°C inclusive thanks to the heating means (16) of the water storage tank or tanks (12, 13).

11. The method for cleaning as claimed in claim 10, **characterized in that** the cleaning product injected into the hydraulic cleaning circuit (9) during step d) is a base and the cleaning product injected into the hydraulic cleaning circuit (9) during step d') is an acid.

12. The method for cleaning as claimed in any one of claims 8 to 11, **characterized in that** said method subsequently includes the steps consisting in:
h) resuming the water treatment in the water treatment system of the unit; and
i) replacing the water which has been used during steps b) and f), and possibly f'), by injecting water obtained leaving the treatment system into the water storage tanks.

13. The method for cleaning as claimed in any one of claims 8 to 12, **characterized in that** the underwater water treatment unit (1) is placed underwater, at a minimum depth of 500 meters.

14. The method for cleaning as claimed in any one of claims 8 to 13, **characterized in that** the contents of the hydraulic cleaning circuit (9) is discharged into the water storage tanks or tanks which has or have been drained following step b).
